# EUROPÄISCHE PATENTSCHRIFT

(11) **EP 1 217 755 B1**
(45) Veröffentlichungstag und Bekanntmachung des Hinweises auf die Patenterteilung: **09.02.2005**
(21) Anmeldenummer: 01123106.5
(22) Anmeldetag: 27.09.2001
(51) Int. Cl.: H04B 1/20, H04M 1/60

(54) **Kommunikationsvorrichtung**
Communication device
Dispositif de communication

(30) Priorität: 20.12.2000 DE 10063438
(43) Veröffentlichungstag der Anmeldung: 26.06.2002
(73) Patentinhaber: ROBERT BOSCH GMBH, 70442 Stuttgart (DE)
(72) Erfinder: Menzel, Thomas, 31188 Holle (DE)

(56) Entgegenhaltungen:
- US-A- 5 537 673
- PATENT ABSTRACTS OF JAPAN vol. 1998, no. 14, 31. Dezember 1998 (1998-12-31) & JP 10 248089 A (TOYOTA MOTOR CORP), 14. September 1998 (1998-09-14)
- PATENT ABSTRACTS OF JAPAN vol. 1999, no. 03, 31. März 1999 (1999-03-31) & JP 10 320892 A (DAIHATSU MOTOR CO LTD), 4. Dezember 1998 (1998-12-04)

## Beschreibung

Die Erfindung geht von einer Kommunikationsvorrichtung für ein Fortbewegungsmittel mit einem Funkgerät, das über ein Mikrofon zur Aufnahme eines zu sendenden Signals und Sendemittel zum Senden des zu sendenden Signals verfügt, und mit einer Audioanlage zur Wiedergabe von Audiosignalen nach der Gattung des unabhängigen Patentanspruchs aus.

Eine gattungsgemäße Kommunikationsvorrichtung für ein Fortbewegungsmittel ist in Form eines sogenannten "RadioPhone", beispielsweise des Typs "Monte Carlo TCM 169" oder "Helsinki RTM 127" aus dem Prospekt "Mobile Kommunikation 2000.www.blaupunkt.de." der Blaupunkt-Werke GmbH, Hildesheim, DE bekannt. Die beschriebenen Geräte vereinen in einem gemeinsamen Gehäuse die Funktionalitäten eines an sich bekannten Autoradiogeräts und eines ebenfalls an sich bekannten GSM-Mobilfunktelefons. Zur Aufnahme eines Sprachsignals im Rahmen eines Telefonats verfügt ein beschriebenes RadioPhone über ein externes Mikrofon, das zur Anbringung vorzugsweise auf einem Armaturenbrett des Kraftfahrzeugs, in das das RadioPhone eingebaut ist, vorgesehen ist.

Es sind weiterhin Telefongeräte bekannt, die über eine Mikrofonstummschaltung zur Stummschaltung eines zur Aufnahme von Sprachsignalen vorgesehenen Mikrofons auf Initiative eines Benutzers verfügen. Eine solche Mikrofonstummschaltung ist beispielsweise für den Fall vorgesehen, dass im Rahmen eines Telefonats zwischen einem ersten und einem zweiten Teilnehmer der erste Teilnehmer mit einer dritten Person Rücksprache halten möchte, ohne dass das dabei besprochene an das Endgerät des zweiten Teilnehmers übertragen wird.

Es sind weiter Telefongeräte bekannt, bei denen für den Fall einer Mikrofonstummschaltung im Rahmen eines Telefonats zwischen einem ersten und einem zweiten Teilnehmer für die Dauer der Mikrofonstummschaltung am Endgerät des ersten Teilnehmers ein Ersatzaudiosignal, insbesondere eine Melodie, eingespielt und an das Endgerät des zweiten Teilnehmers übertragen wird, so dass dieser eine Information über die noch bestehende Telefonverbindung zum ersten Teilnehmer erhält.

### Vorteile der Erfindung

Die erfindungsgemäße Kommunikationsvorrichtung für ein Fortbewegungsmittel mit den Merkmalen des unabhängigen Patentanspruchs hat den Vorteil, dass auch hier eine Mikrofonstummschaltung vorgenommen werden kann. Damit kann die Weiterleitung von im Rahmen einer im Fortbewegungsmittel geführten Unterhaltung anfallenden Informationen für die Dauer der Mikrofonstummschaltung an das Endgerät eines zweiten Gesprächsteilnehmers, das über die laufende Kommunikationsverbindung mit der Kommunikationsvorrichtung in Verbindung steht, unterbunden werden.

Die Erfindung hat weiter den Vorteil, dass für die Dauer der Mikrofonstummschaltung anstelle von Sprachinformationen ein Ersatzaudiosignal an das Endgerät des zweiten Teilnehmers gesandt wird, so dass dieser eine Information über die noch bestehende Kommunikationsverbindung zwischen seinem Endgerät und der Kommunikationsvorrichtung im Fortbewegungsmittel erhält.

Vorteilhafterweise werden für den Fall und die Dauer einer Mikrofonstummschaltung als Ersatzaudiosignale von einer als Teil der Kommunikationsvorrichtung vorhandenen Audioanlage erzeugte Audiosignale verwendet. Eine zusätzliche Audiosignalgenerierung oder ein Audiosignalspeicher zur Erzeugung des Ersatzaudiosignals ist somit beim Erfindungsgegenstand entbehrlich.

Eine Kommunikationsvorrichtung für ein Fortbewegungsmittel mit einem Funkgerät, das über ein Mikrofon zur Aufnahme eines zu sendenden Signals und Sendemittel zum Senden des zu sendenden Signals verfügt, und mit einer Audioanlage zur Wiedergabe von, vorzugsweise auf einem Tonträger gespeicherten oder mittels eines Rundfunkempfängers empfangenen, Audiosignalen, ist hierzu derart ausgestaltet, dass das Funkgerät über eine Mikrofonstummschaltung für das Mikrofon verfügt, und dass im Falle einer mittels der Mikrofonstummschaltung bewirkten Stummschaltung des Mikrofons den Sendemitteln des Funkgeräts Audiosignale der Audioanlage zugeführt werden.

Vorteilhafte Ausführungsformen und Weiterbildungen der Erfindung sind in den abhängigen Patentansprüchen angegeben.

So richtet sich eine vorteilhafte Ausgestaltung der erfindungsgemäßen Kommunikationsvorrichtung darauf, dass die Mikrofonstummschaltung in Form eines Umschalters zur wahlweisen Weiterleitung eines mittels des Mikrofons aufgenommenen Signals oder eines von der Audioanlage zugeführten analogen Audiosignals ausgeführt ist.

So ist zur Stummschaltung des Mikrofons ohnehin ein Schalter vorzusehen, dessen Eingang das Mikrofonsignal zugeführt ist. Zur Vermeidung unerwünschter Effekte im Falle einer Mikrofonstummschaltung ist einem zweiten Eingang des vorzugsweise als Umschalter ausgeführten Schalters ein Bezugspotential zugeführt ist, so dass bei Aktivierung der Mikrofonstummschaltung der Wechselkontakt des Umschalters mit dem Bezugspotential verbunden wird. Erfindungsgemäß kann der Bezugspotentialkontakt des Umschalters zur Zuführung des analogen Audiosignals verwendet werden. Der schaltungstechnische Aufwand zur Modifizierung eines herkömmlichen Funkgeräts zur Verwendung in einer erfindungsgemäßen Kommunikationsvorrichtung ist somit gering.

Weiterhin liegen zumindest an den Lautsprechern der Audioanlage, in der Regel jedoch schon vor einer abschließenden Verstärkung, die wiederzugebenden Audiosignale in analoger Form vor. Dies gilt auch für den Fall, dass die Audioanlage über eine digitale Audiosignalverarbeitung verfügt. Seitens der Audioanlage ist somit ein zusätzlicher Abgriff für das dem Funkgerät im Falle einer Mikrofonstummschaltung zuzuführende analoge Audiosignal vorzusehen.

Die nachfolgend beschriebenen Ausführungsformen der Erfindung richten sich auf ein Funkgerät, das über eine Analog/Digital-Umsetzung und eine Formatierung eines über das Mikrofon aufgenommenen zu sendenden Signals verfügt. Dies trifft beispielsweise auf GSM-Mobilfunktelefone zu. Für diesen Fall ist eine Formatwandlung zur Anpassung eines im Falle einer Stummschaltung des Mikrofons den Sendemitteln zugeführten Audiosignals der Audioanlage an das Format des formatierten Mikrofonsignals vorgesehen.

Gemäss einer ersten vorteilhaften Ausführungsform umfaßt die Formatwandlung eine Digital/Analog-Umsetzung eines in digitaler Form vorliegenden Audiosignals innerhalb der Audioanlage und die Analog/Digital-Umsetzung und Formatierung des Funkgeräts. Mit dieser Weiterbildung der Erfindung kann zur Formatwandlung des Ersatz-Audiosignals vorteilhafterweise auf vorhandene Komponenten der Audioanlage und des Funkgeräts zurückgegriffen werden. Ein weiterer Vorteil ist darin zu sehen, dass das Audiosignal über den beschriebenen Umschalter anstelle des analogen Mikrofonsignals dem Funkgerät zuführbar ist, und sich daher der Schaltungsaufwand zur Realisierung der Erfindung auf ein Mindestmaß beschränkt.

Bei einer alternativen Ausführungsform der Erfindung ist es demgegenüber vorgesehen, dass der Formatwandlung ein digitales Audiosignal zuführbar ist und die Formatwandlung vollständig in digitaler Form ausgeführt ist.

Eine andere Weiterbildung der Erfindung richtet sich darauf, dass eine Aufzeichnungsvorrichtung für Audiosignale als Teil der Audioanlage vorgesehen ist, und dass im Falle einer Stummschaltung des Mikrofons den Sendemitteln des Funkgeräts mittels der Aufzeichnungsvorrichtung aufgezeichnete Audiosignale zuführbar sind. Dies ermöglicht die Einspielung benutzerdefinierter Audiosignale, beispielsweise von Sprachsignalen, wie "Bitte warten" als Ersatz-Audiosignale.

Eine weitere Ausführungsform der Erfindung richtet sich darauf, dass die Lautstärke des dem Funkgerät zugeführten Audiosignals durch eine Lautstärkeregelung der Audioanlage bestimmbar ist. Hierzu ist der Abgriff für das dem Funkgerät zugeführte Audiosignal im Signalpfad der Audioanlage hinter der Lautstärkeregelung vorzusehen. Diese Ausgestaltung der Erfindung hat den besonderen Vorteil, dass die Lautstärke des Ersatz-Audiosignals an die Wünsche des Benutzers, insbesondere an einen üblichen Pegel des mittels des Mikrofons aufgenommenen Sprachsignals, anpaßbar ist, so dass die Lautstärke des Ersatz-Audiosignals auf Seiten des zweiten Teilnehmers weder als zu leise, noch als zu laut empfunden wird.

### Zeichnungen

Ausführungsbeispiele der Erfindung sind in der Figur dargestellt und werden nachfolgend näher erläutert.

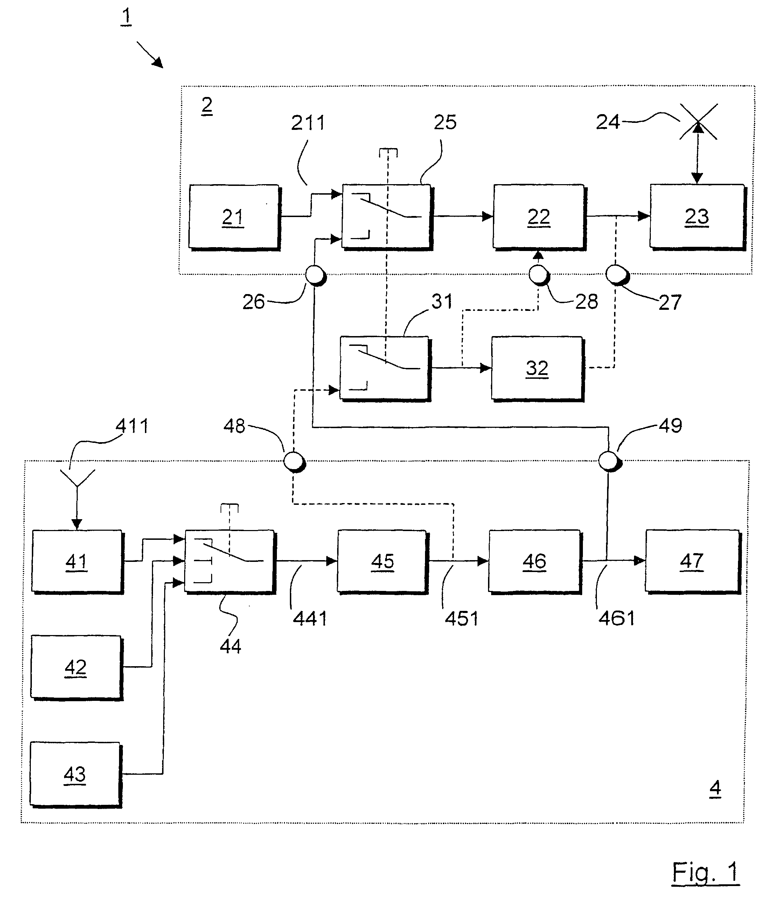

Figur 1 zeigt ein Blockschaltbild des erfindungswesentlichen Teils einer Kommunikationsvorrichtung für ein Fortbewegungsmittel.

### Beschreibung der Ausführungsbeispiele

Die erfindungsgemäße Kommunikationsvorrichtung wird nachfolgend am Beispiel einer Kommunikationsvorrichtung für ein Kraftfahrzeug beschrieben. Die Kommunikationsvorrichtung 1 umfaßt ein Funkgerät 2, im vorliegenden Fall in Form eines GSM-Mobilfunktelefons, und eine Audioanlage 4, hier in Form eines Autoradios.

Das GSM-Mobilfunktelefon umfaßt ein Mikrofon 21 zur Aufnahme von im Rahmen eines Telefongesprächs anfallenden Sprachsignalen. Die über das Mikrofon 21 aufgenommenen zu sendenden Audiosignale 211, also in der Regel als Teil eines Telefongesprächs anfallende Sprachsignale, sind einer Analog/Digital-Umsetzung und Formatierung, die in der Figur zu einer Sendesignalverarbeitung 22 zusammengefaßt sind, zugeführt. Das von der Sendesignalverarbeitung 22 aufgearbeitete zu sendende Audiosignal ist schließlich Sendemitteln 23 des GSM-Mobilfunktelefons zugeführt, die das aufbereitete Sendesignal über eine angeschlossene Antenne 24 abstrahlen.

Das beschriebene GSM-Mobilfunktelefon umfaßt erfindungsgemäß eine Mikrofonstummschaltung, die im vorliegenden Fall in Form eines in den Signalpfad zwischen Mikrofon 21 und Sendesignalverarbeitung 22 eingeschleiften Umschalters 25, nachfolgend auch Schalters 25, ausgeführt ist. Einem ersten Eingangskontakt des Schalters 25 ist das mittels des Mikrofons 21 aufgenommene zu sendende Audiosignal zugeführt, das in einer ersten, in der Figur dargestellten Schaltstellung eines Wechselkontakts des Umschalters 25 der Sendesignalverarbeitung 22 zugeführt ist. Somit wird in einer ersten Schaltstellung des Wechselkontakts des Schalters 25 das über das Mikrofon aufgenommene Sprachsignal als GSM-Mobilfunksignal über die Antenne 24 des GSM-Mobilfunktelefons gesendet.

Das Funkgerät 2 weist erfindungsgemäß mindestens einen zusätzlichen Signaleingang 26, 27, 28 zur Einspeisung eines Ersatz-Audiosignals, das im Falle einer Mikrofonstummschaltung mittels des Schalters 25 anstelle eines mittels des Mikrofons aufgenommenen Sprachsignals als GSM-Mobilfunksignal über die Antenne 24 des Funkgeräts abgestrahlt werden soll, auf.

Ein erster zusätzlicher Signaleingang 26 des Funkgeräts 2 ist mit einem zweiten Eingangskontakt des Umschalters 25 verbunden, so dass bei Unterbrechung des Signalpfads zwischen Mikrofon 21 und Sendesignalverarbeitung 22 ein über den ersten zusätzlichen Signaleingang 26 eingespeistes analoges Audiosignal der Sendesignalverarbeitung 22 zugeführt ist. Dieses Ersatz-Audiosignal wird dem Funkgerät 2 erfindungsgemäß von einer Audioanlage 4 zugeführt.

Die ebenfalls in der Figur dargestellte Audioanlage, hier in Form eines Autoradios 4, umfaßt in an sich bekannter Weise einen Rundfunkempfänger 41 mit einer Empfangsantenne 411, eine Tonträgerwiedergabevorrichtung 42, beispielsweise ein CD- (Compact Disc-) Abspielgerät, und einen durch den Benutzer über ein nicht dargestelltes Mikrofon oder anderweitig bespielbaren Audiosignalspeicher 43. Die beschriebenen Audiosignalquellen, nämlich der Rundfunkempfänger 41, die Tonträgerwiedergabevorrichtung 42 und der Audiosignalspeicher 43 sind über einen Quellenwahlschalter 44 mit einer digitalen Audiosignalverarbeitung 45 nach Maßgabe eines dem Quellenwahlschalter 44 zugeführten Stellsignals verbindbar. Die digitale Audiosignalverarbeitungsschaltung 45 umfaßt in an sich bekannter Weise einen Klangsteller zur Beeinflussung des Amplitudenfrequenzgangs eines von einer der Quellen 41 bis 43 zugeführten Audiosignals 441, des weiteren eine Lautstärkeregelung zur benutzerspezifischen Einstellung der Lautstärke eines wiederzugebenden Audiosignals. Das mittels der digitalen Audiosignalverarbeitung 45 verarbeitete Audiosignal 451 ist einer Digital/Analog-Umsetzung 46 zugeführt, an deren Ausgang ein analoges Audiosignal 461 abnehmbar ist. Das analoge Audiosignal 461 ist einer Wiedergabevorrichtung 47, die in an sich bekannter Weise Mittel zur Endverstärkung des wiederzugebenden Audiosignals und daran angeschlossene Lautsprecher verfügt, zugeführt.

Erfindungsgemäß weist das Autoradio einen ersten Signalausgang 49 auf, an dem das analoge Audiosignal 461 abnehmbar ist. Gemäss einer ersten Ausführungsform der Erfindung, in der dem Funkgerät 2 das analoge Audiosignal 461 zugeführt ist, ist der erste zusätzliche Signaleingang 26 des Funkgeräts 2 mit dem ersten Signalausgang 49 des Autoradios 4 verbunden.

Gemäss einer alternativen Ausführungsform der Erfindung ist dem Funkgerät 2 anstelle eines analogen Audiosignals 461 ein in digitaler Form vorliegendes Audiosignal 451 als Ersatz-Audiosignal für den Fall einer Mikrofonstummschaltung zugeführt. Hierzu verfügt das Autoradio 4 über einen zweiten Signalausgang 48, an dem das durch die digitale Audiosignalverarbeitung 45 vorverarbeitete digitale Audiosignal 451 abnehmbar ist. Das am zweiten Signalausgang 48 des Autoradios abnehmbare digitale Audiosignal 451 ist einem zweiten Schalter 31 zugeführt, der vorzugsweise über ein gemeinsames Stellsignal gleichzeitig mit dem Umschalter 25 des Funkgeräts 2 betätigt wird. Für den Fall einer Mikrofonstummschaltung mittels des Umschalters 25 des Funkgeräts 2 bewirkt der zweite Schalter 31 die Weiterleitung des ihm zugeführten digitalen Audiosignals 451.

Gemäss einer ersten Variante der vorliegenden Ausführungsform ist das weitergeleitete digitale Audiosignal 451 einer Formatumwandlungsschaltung 32 zugeführt, die das digitale Audiosignal 451 an das Format des von der Sendesignalverarbeitung 22 vorverarbeiteten Sendesignals anpaßt. Das dermaßen mittels der Formatanpassung 32 formatierte digitale Audiosignal 451 ist über einen zweiten zusätzlichen Signaleingang 27 des Funkgeräts 2 unmittelbar den Sendemitteln 23 zugeführt. Im Falle einer Mikrofonstummschaltung mittels des Umschalters 25 wird somit das digitale Audiosignal 451, welches am zweiten Signalausgang 48 des Autoradios ansteht, über den zweiten Schalter 31 und die Formatanpassung 32 dem zweiten zusätzlichen Signaleingang 27 des Funkgeräts 2 und damit den Sendemitteln zugeführt, und wird somit anstelle des Mikrofonsignals 211 als Mobilfunksignal über die Antenne 24 des Funkgeräts 2 abgestrahlt.

Bei einer zweiten Variante der vorliegenden Ausführungsform wird das digitale Audiosignal 451 vom Ausgang des zweiten Schalters 32 einem dritten Signaleingang 28 des Funkgeräts 2 zugeführt. Der dritte Signaleingang 28 des Funkgeräts ist im Signalpfad zwischen der Analog/Digital-Umsetzung und der Formatanpassung des Funkgeräts angeordnet, so dass die im Funkgerät ohnehin vorhandene Formatanpassung zur Anpassung des Formats auch des zugeführten Ersatz-Audiosignals an das erforderliche Sendesignalformat verwendbar ist.

Allen beschriebenen Ausführungsformen ist gemeinsam, dass die Lautstärke des dem Funkgerät 2 zugeführten Audiosignals durch eine Lautstärkeregelung der Audioanlage 4, die hier als Teil der digitalen Audiosignalverarbeitung 45 realisiert ist, bestimmbar ist.

Bei den beschriebenen Ausführungsformen der Erfindung sind Funkgerät 2, Autoradio 4 und, sofern vorhanden, zweiter Schalter 31 sowie Formatanpassungsschaltung 32 jeweils als getrennte Baugruppen ausgeführt. Demgegenüber kann es jedoch auch vorgesehen sein, dass die beschriebenen Baugruppen in einem einzigen Gerät, insbesondere einem RadioPhone, zusammengefaßt sind.

## Patentansprüche

1. Kommunikationsvorrichtung (1) für ein Fortbewegungsmittel mit einem Funkgerät (2), das über ein Mikrofon (21) zur Aufnahme eines zu sendenden Signals und Sendemittel (23) zum Senden des zu sendenden Signals verfügt,
und mit einer Audioanlage (4) zur Wiedergabe von, vorzugsweise auf einem Tonträger (42) gespeicherten oder mittels eines Rundfunkempfängers (41) empfangenen, Audiosignalen,
**dadurch gekennzeichnet,**
**daß** das Funkgerät (2) über eine Mikrofonstummschaltung (25) für das Mikrofon (21) verfügt,
und **daß** im Falle einer mittels der Mikrofonstummschaltung (25) bewirkten Stummschaltung des Mikrofons (21) den Sendemitteln (23) des Funkgeräts (2) Audiosignale (441, 451) der Audioanlage (4) zugeführt werden.

2. Kommunikationsvorrichtung nach Anspruch 1, **dadurch gekennzeichnet, daß** die Mikrofonstummschaltung als Umschalter (25) zur wahlweisen Weiterleitung eines mittels des Mikrofons (21) aufgenommenen Signals (211) oder eines von der Audioanlage zugeführten analogen Audiosignals (441) ausgeführt ist.

3. Kommunikationsvorrichtung nach Anspruch 2, **dadurch gekennzeichnet, daß** die Audioanlage (4) über eine digitale Audiosignalverarbeitung (45) verfügt, und daß das Audiosignal nach einer im Signalpfad der Audioanlage angeordneten Digital/Analog-Wandlung (46) abgenommen wird.

4. Kommunikationsvorrichtung nach Anspruch 1, **dadurch gekennzeichnet, daß** das Funkgerät (2) über eine Analog/Digital-Umsetzung und eine Formatierung (22) eines über das Mikrofon (21) aufgenommenen zu sendenden Signals (211) verfügt,
und daß eine Formatwandlung (32; 46, 22) zur Anpassung eines im Falle einer Stummschaltung des Mikrofons (21) den Sendemitteln (23) zugeführten Audiosignals (451) der Audioanlage (4) an das Format des formatierten Mikrofonsignals (211) vorgesehen ist.

5. Kommunikationsvorrichtung nach Anspruch 4, **dadurch gekennzeichnet, daß** die Formatwandlung eine Digital/Analog-Umsetzung (46) eines in digitaler Form vorliegenden Audiosignals (451) innerhalb der Audioanlage (4) und die Analog/Digital-Umsetzung und Formatierung (22) des Funkgeräts (2) umfaßt.

6. Kommunikationsvorrichtung nach Anspruch 4, **dadurch gekennzeichnet, daß** der Formatwandlung ein digitales Audiosignal (451) zuführbar ist und die Formatwandlung (32) in digitaler Form ausgeführt ist.

7. Kommunikationsvorrichtung nach einem der vorhergehenden Ansprüche, **dadurch gekennzeichnet, daß** eine Aufzeichnungsvorrichtung (43) für Audiosignale vorgesehen ist, und daß im Falle einer Stummschaltung des Mikrofons (21) den Sendemitteln (23) mittels der Aufzeichnungsvorrichtung (43) aufgezeichnete Audiosignale zuführbar sind.

8. Kommunikationsvorrichtung nach einem der vorhergehenden Ansprüche, **dadurch gekennzeichnet, daß** die Lautstärke des dem Funkgerät (2) zugeführten Audiosignals (441, 451) durch eine Lautstärkeregelung der Audioanlage (4) bestimmt ist.

## Claims

1. Communication apparatus (1) for a transportation means having a radio (2), which has a microphone (21) for picking up a signal which is to be transmitted and transmission means (23) for transmitting the signal which is to be transmitted,
and having an audio installation (4) for reproducing audio signals which are preferably stored on a sound carrier (42) or are received using a broadcast radio receiver (41),
**characterized**
**in that** the radio (2) has a microphone muting facility (25) for the microphone (21),
and **in that** in the event of the microphone (21) being muted as a result of the microphone muting facility (25) the transmission means (23) in the radio (2) are supplied with audio signals (441, 451) from the audio installation (4).

2. Communication apparatus according to Claim 1, **characterized in that** the microphone muting facility is in the form of a changeover switch (25) for selectively forwarding a signal (211) picked up by means of the microphone (21) or an analogue audio signal (441) supplied by the audio installation.

3. Communication apparatus according to Claim 2, **characterized in that** the audio installation (4) has a digital audio signal processing facility (45), and **in that** the audio signal is removed downstream of a digital/analogue conversion facility (46) arranged in the audio installation's signal path.

4. Communication apparatus according to Claim 1, **characterized in that** the radio (2) has an analogue/digital conversion facility and a formatting facility (22) for a signal (211) which is to be transmitted which has been picked up by means of the microphone (21),
and **in that** a format conversion facility (32; 46, 22) is provided for aligning an audio signal (451) from the audio installation (4), which is supplied to the transmission means (23) in the event of the microphone (21) being muted, with the format of the formatted microphone signal (211).

5. Communication apparatus according to Claim 4, **characterized in that** the format conversion facility comprises a digital/analogue conversion facility (46) for an audio signal (451) available in digital form within the audio installation (4) and comprises the analogue/digital conversion facility and formatting facility (22) in the radio (2).

6. Communication apparatus according to Claim 4, **characterized in that** the format conversion facility can be supplied with a digital audio signal (451), and the format conversion facility (32) is in digital form.

7. Communication apparatus according to one of the preceding claims, **characterized in that** a recording apparatus (43) for audio signals is provided, and **in that** in the event of the microphone (21) being muted the transmission means (23) can be supplied with audio signals recorded by means of the recording apparatus (43).

8. Communication apparatus according to one of the preceding claims, **characterized in that** the volume of the audio signal (441, 451) supplied to the radio (2) is determined by a volume control in the audio installation (4).

## Revendications

1. Dispositif de communication (1) pour un moyen de locomotion doté d'un appareil radio (2), qui dispose d'un microphone (21) pour enregistrer un signal à envoyer et de moyens émetteurs (23) pour envoyer le signal, et d'un dispositif audio (4) pour reproduire les signaux audio reçus à l'aide d'un récepteur radio (41) ou enregistrés de préférence sur une bande d'enregistrement (42),
**caractérisé en ce que**
l'appareil radio (2) est doté d'une commande de silencieux du microphone (25) pour le microphone (21), et des signaux audio (441, 451) du dispositif audio (4) sont amenés aux moyens émetteurs (23) de l'appareil radio (2) dans le cas d'une commande de silencieux du microphone (21) actionnée par la commande de silencieux du microphone (25).

2. Dispositif de communication selon la revendication 1,
**caractérisé en ce que**
la commande de silencieux du microphone est conçue en tant que commutateur (25) permettant la communication facultative d'un signal (211) enregistré à l'aide du microphone (21) ou d'un signal audio (441) analogique amené par le dispositif audio.

3. Dispositif de communication selon la revendication 2,
**caractérisé en ce que**
le dispositif audio (4) dispose d'un traitement numérique des signaux audio (45) et le signal audio est prélevé suivant une transformation analogique/numérique (46) disposée dans le cheminement du signal du dispositif audio.

4. Dispositif de communication selon la revendication 1,
**caractérisé en ce que**
l'appareil radio (2) dispose d'une conversion analogique/numérique et d'un formatage (22) d'un signal (211) à envoyer enregistré via le microphone (21)
et un changement de format (32 ; 46, 22) est prévu pour adapter un signal audio (451) du dispositif audio (4) amené aux moyens émetteurs (23) dans le cas d'une commande de silencieux du microphone (21) au format du signal de microphone formaté (211).

5. Dispositif de communication selon la revendication 4,
**caractérisé en ce que**
le changement de format comprend une conversion analogique/numérique (46) d'un signal audio (451) existant sous forme numérique à l'intérieur du dispositif audio (4) ainsi que la conversion analogique/numérique et le formatage (22) de l'appareil radio (2).

6. Dispositif de communication selon la revendication 4,
**caractérisé en ce qu'**
un signal audio numérique (451) peut être amené au changement de format et le changement de format (32) a lieu sous forme numérique.

7. Dispositif de communication selon l'une quelconque des revendications précédentes,
**caractérisé en ce qu'**
il est prévu un dispositif d'enregistrement (43) pour des signaux audio et dans le cas d'une commande du silencieux du microphone (21), des signaux audio enregistrés à l'aide du dispositif d'enregistrement (43) peuvent être amenés aux moyens émetteurs (23).

8. Dispositif de communication selon l'une quelconque des revendications précédentes,
**caractérisé en ce que**
la puissance sonore du signal audio (444, 451) amené à l'appareil radio (2) est déterminée par un réglage de volume du dispositif audio (4).
